# EUROPÄISCHE PATENTSCHRIFT

(11) **EP 2 768 892 B1**
(45) Veröffentlichungstag und Bekanntmachung des Hinweises auf die Patenterteilung: **07.11.2018**
(21) Anmeldenummer: 12766436.5
(22) Anmeldetag: 25.09.2012
(51) Int. Cl.: C08J 9/236, C08J 9/02, B29L 31/30, B29C 44/34, B29C 44/12, B29K 75/00, B29K 33/00

(54) **VERFAHREN ZUR HERSTELLUNG VON EXPANDIERTEN COPOLYMEREN AUF BASIS VON POLY(METH)ACRYLIMID ENTHALTEND EINEN HAFTVERMITTLER**
PROCESS FOR PREPARING EXPANDED COPOLYMERS BASED ON POLY(METH)ACRYLIMIDE COMPRISING AN ADHESION PROMOTER
PROCÉDÉ DE PRODUCTION DE COPOLYMÈRES EXPANSÉS À BASE DE POLY(MÉTH)ACRYLIMIDE CONTENANT UN AGENT ADHÉSIF

(30) Priorität: 21.10.2011 DE 102011085026
(43) Veröffentlichungstag der Anmeldung: 27.08.2014
(73) Patentinhaber: Evonik Röhm GmbH, 64293 Darmstadt (DE)
(72) Erfinder: BÜHLER, Sebastian, 64297 Darmstadt (DE); KRAATZ, Arnim, 64287 Darmstadt (DE); PIOTROWSKI, Ina, 64347 Griesheim (DE); BERNHARD, Kay, 64291 Darmstadt (DE)
(86) Internationale Anmeldenummer: PCT/EP2012/068885
(87) Internationale Veröffentlichungsnummer: WO 2013/056947

(56) Entgegenhaltungen:
- DE-A1- 1 817 156
- DE-A1- 10 217 005
- DE-A1- 10 256 816

## Beschreibung

### Gebiet der Erfindung

Die Erfindung betrifft ein Verfahren zur Herstellung von expandierten Copolymeren auf Basis von Methacryl- und Acrylverbindungen mit guter Korngrenzenhaftung und die Anhaftung diverser Deckschichten aus Kunststoffen und/oder Metallen und/oder Faser-Kunststoff-Verbunden auf dem so erhaltenen Schaumkern.

### Stand der Technik

ROHACELL® stellt einen vielseitig verwendbaren Schaumstoff dar und wird von der Evonik Röhm GmbH in den Handel gebracht.

In DE 27 26 260 (Röhm GmbH) wird die Herstellung von Poly(meth)acrylimid-Schäumen (PMI-Schäumen) beschrieben, die ausgezeichnete mechanische Eigenschaften auch bei hohen Temperaturen aufweisen. Die Herstellung der Schäume erfolgt im Gussverfahren, d.h. die Monomere und erforderliche Zusatzstoffe werden gemischt und in einer Kammer polymerisiert. Das Polymerisat wird in einem zweiten Schritt durch Erwärmen geschäumt. Ein Nachteil der in DE 27 26 260 beschriebenen Schäume ist ihre grobe Porenstruktur. Durch Variation der Treibmittel kann die Porengröße bereits erheblich gesenkt werden.

Die Herstellung von PMI-Schäumen mit noch kleineren Poren gelang durch die Verwendung von unlöslichen Nukleierungsmitteln (DE 10 21 22 35.0, Röhm GmbH). Die Verwendung von unlöslichen Nukleierungsmitteln im Gussverfahren bringt jedoch erheblichen Mehraufwand bei der Produktion mit sich. Das zu polymerisierende Comonomergemisch hat eine Dichte von nur ca. 0,8 g/cm³. Als Nukleierungsmittel in Betracht kommende Substanzen wie beispielsweise Siliziumdioxid, Zinksulfid, Natrium- oder Kaliumchlorid haben höhere Dichten als das Monomergemisch und setzen sich daher sofort ab. Ein Schaum mit gleichmäßiger Porenstruktur kann nur erhalten werden, wenn die Absetzung des Nukleierungsmittels unterdrückt wird. Dazu müssen dem Monomergemisch Antiabsetzmittel wie beispielsweise Aerosil und Ruße oder Verdickungsmittel wie lösliche, hochmolekulare Polymere zugesetzt werden und diese aufwändig gemeinsam mit dem Nukleierungsmittel in die Gemische eingearbeitet werden.

Feinporige Schäume auf der Basis von PMI wurden darüber hinaus in EP 532 023 (Röhm GmbH) beschrieben. Das dort beschriebene Verfahren weist aber verschiedene, gravierende Nachteile auf. Zur Polymerisation wurden relativ hohe Konzentrationen an Initiator verwendet, so dass das resultierende Polymer trotz der Herstellung im Gussverfahren nur ein gewichtsmittleres Molekulargewicht im Bereich von 50-500 kDa aufweist. Weiterhin wurde der Rezeptur kein Vernetzer zugesetzt. Die resultierenden Schäume haben aus diesen Gründen nur eine niedrige Wärmeformbeständigkeit und ein schlechtes Kriechverhalten.

Feinporige Schaumstoffe sind bekannt und werden unter dem Namen ROHACELL® von der Evonik Röhm GmbH vertrieben. Es ist möglich, eine Feinporigkeit durch eine Variation von Treibmitteln oder durch den Zusatz von unlöslichen Nukleierungsmitteln zu erreichen. Problematisch ist jedoch, dass die über eine Variation der Treibmittel erreichte Feinporigkeit nicht immer ausreichend ist. Feinporigere Materialien können durch die Verwendung von unlöslichen Nukleierungsmitteln hergestellt werden, letztere erfordern jedoch die Verwendung von Antiabsetzmitteln, was einen erhöhten Aufwand in der Produktion mit sich bringt.
Poly(meth)acrylimide mit hoher Wärmeformbeständigkeit können durch Umsetzung von Polymethyl(meth)acrylat oder dessen Copolymeren mit primären Aminen erhalten werden. Stellvertretend für die Vielzahl an Beispielen für diese polymeranaloge Imidierung seien genannt: US 4 246 374 (Rohm & Haas), EP 216 505 A2 (Rohm & Haas), EP 860 821 (Saint Gobian Vitrage). Hohe Wärmeformbeständigkeit lässt sich hierbei entweder durch Einsatz von Arylaminen (JP 05222119 A2, Mitsubishi Rayon) oder durch die Verwendung von speziellen Comonomeren erreichen (EP 561 230 (BASF AG), EP 577 002 A1 (BASF AG)). All diese Reaktionen ergeben jedoch keine Schäume, sondern feste Polymere, die zum Erhalt eines Schaumes in einem separaten zweiten Schritt aufgeschäumt werden müssten.

Poly(meth)acrylimid-Schaumstoffe sind seit langem bekannt (siehe z. B. DE-C 27 26 260 (Röhm GmbH)). Sie finden wegen ihrer hohen Wärmeformbeständigkeit, ihrer guten Druckfestigkeit und ihres geringen Gewichts eine breite Anwendung z. B. als Kernmaterial für Schichtwerkstoffe oder Schaumstoffverbundkörper (vgl. DE-C 28 22 885 (Röhm GmbH), DE-A 33 04 882 (Röhm GmbH), US-A 4 316 934 (Röhm GmbH)).

DE 3 630 930 (Röhm GmbH) beschreibt eine weiteres Verfahren zur Schäumung der oben genannten Copolymerplatten aus Methacrylsäure und Methacrylnitril. Hierbei werden die Platten mit Hilfe eines Mikrowellenfeldes zum Schäumen gebracht, weshalb dieses im Folgenden als Mikrowellenverfahren bezeichnet wird. Hierbei muss beachtet werden, dass die zu schäumende Platte oder zumindest ihre Oberfläche vorher bis oder über den Erweichungspunkt des Materials erhitzt werden muss. Da unter diesen Bedingungen naturgemäß auch die Schäumung des durch die äußerliche Erwärmung erweichten Materials einsetzt, ist der Schäumprozeß allein durch den Einfluss eines Mikrowellenfeldes nicht steuerbar, sondern muss von einem begleitenden Heizen von außen mitgesteuert werden. Es wird also zu dem normalen einstufigen Heißluftverfahren ein Mikrowellenfeld hinzugeschaltet um die Schäumung zu beschleunigen. Das Mikrowellenverfahren hat sich jedoch als zu kompliziert und daher nicht praxisrelevant erwiesen und findet bis heute keine Anwendung.

WO 90/2621 (Röhm GmbH) beschreibt einen Schaum aus Methacrylsäure und Methacrylnitril, wobei Acrylamid als Comonomer verhindert, das bei der Polymerisation vorzeitig Niederschläge entstehen. Der gebildete Schaum ist sehr gleichmäßig, das Produkt weist keine internen Spannungen auf.

DE 197 17 483 (Röhm GmbH) beschreibt ein Verfahren zur Herstellung von Polymethacrylimid-Schaumstoffen, die mit 1-5 Gew.-%, bezogen auf die Monomermischung, MgO versetzt sind. Man erhält Schäume mit deutlich verbesserten thermomechanischen Eigenschaften.

DE 19 925 787 (Röhm GmbH) beschreibt ein Verfahren zur Herstellung von Lautsprechermembranen durch Laminieren eines Schaumstoffkörpers aus ROHACELL® mit einer Deckschicht. Die Deckschicht dient zur Erhöhung der Festigkeit. Die Laminierung erfolgt in einer Presse bei Temperaturen über 160°C und Drucken > 0,4 MPa. Über die mechanischen Eigenschaften des Kunststoffschaumstoffformkörpers alleine, ohne die auflaminierte Deckschicht, werden keine Aussagen gemacht.

DE 196 06 530 (Röhm GmbH) beschreibt den Zusatz eines Flammschutzes zu Polymethacryl imid-Schaumstoffen.

Mechanisch stabile PMI-Schäume, die mit Allylmethacrylat vernetzt sind, finden sich in EP 356 714 (Röhm GmbH). Als Radikalbildner wird beispielsweise Azo-bis-isobutyronitril verwendet, dem zu polymerisierenden Gemisch werden 0,1 Gew.-% - 10 Gew.-% an elektrisch leitfähigen Partikeln zugesetzt Auch diese sehr festen Schäume zeigen eine nur sehr geringe Reißdehnung. Gleiches gilt für die in JP 2006 045532 offenbarten, mit Metallsalzen ionisch vernetzten PMI-Schäume.

Feinporige Schaumstoffe mit Vernetzer sind ebenfalls bekannt und finden sich in EP 1 678 244 (Röhm GmbH). Diese Feinporigen Materialien können Reißdehnung von bis zu 5,5% aufweisen. Es ist möglich, eine Feinporigkeit durch eine Variation von Treibmitteln oder durch den Zusatz von unlöslichen Nukleierungsmitteln zu erreichen. Feinporigere Materialien können durch die Verwendung von unlöslichen Nukleierungsmitteln hergestellt werden, letztere erfordern jedoch die Verwendung von Antiabsetzmitteln, was einen erhöhten Aufwand in der Produktion mit sich bringt. Insgesamt sind jedoch keine kleinporigen Schäume mit Reißfestigkeiten größer 5,5% beschrieben.

In EP 1 175 458 (Röhm GmbH) wird die Herstellung dicker Blöcke in isothermer Fahrweise beschrieben. Dies wird erzielt durch die Verwendung von mindestens 4 verschiedenen Initiatoren. Der beschriebene bei höchster Temperatur aktive Initiator hat eine Halbwertszeit von 1h bei 115 °C bis 125 °C und wirkt vor allem beim Tempern, nicht jedoch beim Schäumen.

Schäume auf Basis Methacrylsäure und Acrylnitril werden beispielsweise in der CN 100420702C beschrieben.

Alternativ können mindestens 2 bei hohen Temperaturen zerfallende Initiatoren (Hochzerfaller) mit einer Halbwertszeit von 1 h bei 60 °C bis 100°C bzw. 100 °C bis 140°C zusätzlich verwendet werden. Dieses Verfahren ist so jedoch nicht auf zu schäumende bzw. säurehaltige Systeme übertragbar.

DE 18 17 156 (Röhm GmbH) beschreibt die Herstellung von verschäumbaren Formmassen aus einer Mischung aus Methacrylnitril, Methacrylsäure und Formamid, Harnstoff oder Monomethylformamid als Treibmittel in Plattenform, indem man Gemische aus Methacrylnitril und Methacrylsäure zwischen zwei Glasplatten, welche mit einer flexiblen Schnur abgedichtet sind, polymerisiert. Ferner sind Radikalbildner zugegen, beispielsweise als Zweikomponentengemisch aus tert.-Butylperpivalat und Benzoylperoxid. Als verschäumbare Formmassen werden Kunststoffformkörper, wie beispielsweise Granulate, die durch mahlen eines kompakten Kunststoffformkörpers gewonnen werden oder durch Perlpolymerisation erhältliche Perlen geschäumt. Es wird ein mehrstufiges Schäumverfahren ohne die Verwendung von Haftvermittlern beschrieben, mechanische oder chemische Eigenschaften der Schaumköper werden nicht mitgeteilt.

### Aufgabe

Aufgabe der vorliegenden Erfindung war die Bereitstellung eines neuen Verfahrens zum Inmold-Foamings von Copolymeren auf Basis von Methacryl- und Acrylverbindungen. Insbesondere soll das Verfahren zu einem Schaum mit besonders guter Korngrenzenhaftung führen.

Insbesondere war es Aufgabe der vorliegenden Erfindung, ein Verfahren zur Herstellung besagter Schäume mit sehr guter Anhaftung von Deckschichten aus Kunststoffen und/oder Metallen und/oder Faser-Kunststoff-Verbunden auf dem so erhaltenen Schaumkern zur Verfügung zu stellen.

### Lösung

Gelöst wurden die Aufgaben durch ein neuartiges Verfahren zur Herstellung eines Schaumstoffformkörpers aus Poly(meth)acrylimid, einem Haftvermittler oder einen Haftvermittlergemisch und optionalen Hilfsstoffen, umfassend folgende Schritte:
- Mahlen eines Kunststoffformkörpers aus Poly(meth)acrylimid,
- Beschichten des im vorherigen Schritts erhaltenen Mahlguts mit einem Haftvermittler,
- Einfüllen des beschichteten Mahlguts in eine Form,
- optionales Hinzufügen der Hilfsstoffe,
- Erhitzen der Form,
- Abkühlen der Form unter die Schäumtemperatur
- Entformen des Schaumstoffformkörpers.

Dabei gibt es erfindungsgemäß zwei Varianten des Verfahrens: ein einstufiges und ein zweistufiges Verfahren.

Das einstufige Verfahren umfasst dabei folgende Schritte:
- Mahlen eines Kunststoffformkörpers aus Poly(meth)acrylimid,
- Beschichten des im vorherigen Schritts erhaltenen Mahlguts mit einem Haftvermittler,
- Einfüllen des beschichteten Mahlguts in eine Form,
- optionales Hinzufügen der Hilfsstoffe,
- Erhitzen der Form,
- Abkühlen der Form unter die Schäumtemperatur
- Entformen des Schaumstoffformkörpers.

Das zweistufige Verfahren umfasst folgende Schritte:
- Mahlen eines Kunststoffformkörpers aus Poly(meth)acrylimid,
- Vorschäumen des Mahlguts
- Beschichten des im vorherigen Schritts erhaltenen Mahlguts mit einem Haftvermittler,
- Einfüllen des beschichteten Mahlguts in eine Form,
- optionales Hinzufügen der Hilfsstoffe,
- Erhitzen der Form,
- Abkühlen der Form unter die Schäumtemperatur
- Entformen des Schaumstoffformkörpers.

Dabei können bevorzugt Polyamide als Haftvermittler verwendet werden. Diese werden insbesondere in Mengen von 1 Gew.-% bis 20 Gew.-%, bevorzugt von 1 Gew.-% bis 15 Gew.-% und besonders bevorzugt von 1 Gew.-% bis 10 Gew.-% bezogen auf das Mahlgut eingesetzt.

Genauso bevorzugt können Poly(meth)acrylate als Haftvermittler verwendet werden. Diese werden insbesondere in Mengen von 1 Gew.-% bis 20 Gew.-%, bevorzugt von 1 Gew.-% bis 15 Gew.-% und besonders bevorzugt von 1 Gew.-% bis 10 Gew.-% bezogen auf das Mahlgut eingesetzt.

Die wesentlichen Vorteile bei der Herstellung von Schaumstoff-Bauteilen aus Copolymerisat Mahlgut mit Haftvermittler sind die folgenden:
- Gute Dosierbarkeit des Mahlgutes in der Form/Werkzeug in Verbund mit dem Haftvermittler,
- Durch sofortiges Aufschmelzen des Haftvermittlers kann das Mahlgut an der entsprechenden Formstelle positioniert werden (z.B. an einer Schräge),
- Haftungsherstellung zwischen Korngrenzen/Bindenähten im Schaumkern,
- Exakte und glatte Abbildung der Formoberfläche auf dem Schaumkern,
- Optimierte Haftungsherstellung zwischen Schaumkern und einer entsprechenden Matrix der Deckschichten (z.B. thermoplastisch, duroplastisch oder metallisch).

Um einen homogenen Schaumkörper aus expandierbaren Methacryl- und Acrylbasis basierenden Polymermahlgutes mit Haftvermittler herzustellen, wird zuerst das Mahlgut aus dem entsprechenden Polymer abgewogen, um im Verhältnis zum Werkzeugvolumen eine gewünschte Dichte zu erreichen. Danach wird das Mahlgut mit dem festen oder flüssigen oder Mischungen aus festen und flüssigen Haftvermittlern benetzt durch Vermischen beider Materialien. Die Haftvermittler benetzen das Mahlkorn teilweise oder ganzflächig und bilden eine mehr oder weniger geschlossene Schicht um dieses.

Die Korngröße des Mahlguts liegt zwischen 1,5 mm und 5 mm, bevorzugt zwischen 2 mm und 4 mm und ganz besonders bevorzugt zwischen 2,5 mm und 3,5 mm. Die Bestimmung der Korngrößen erfolgt durch Siebung mit Sieben der Maschenweiten 5 mm, 3 mm, 1,5 mm und 1 mm.

Die Herstellung des Mahlguts erfolgt beispielsweise in einer Schneidmühle. Diese verfügt über je zwei Stator- und Rotormesser in vertikaler Anordnung. Die Drehzahl des Rotors beträgt 50 Umdrehungen/min, die elektrische Leistung des Motors 1,5 kW. Bei der Schneidmühle (Hersteller: Siemens, Baugruppe 132S) liegt der Durchsatz beispielsweise bei ca. 1 kg/Stunde bis 1,5 kg/Stunde.

Die Zugabemenge beispielsweise des pulverförmigen Haftvermittlers liegt bei 1 Gew.-% bis 20 Gew.-% des Mahlgutes, bevorzugt bei 1 Gew.-% bis 15 Gew.-% des Mahlgutes und ganz besonders bevorzugt bei 1 Gew.-% bis 10 Gew.-% des Mahlgutes. Der Haftvermittler ermöglicht es im geschmolzenen Zustand, dass die aufzuschäumenden Polymerisatteilchen aneinander vorbei und an der Wand der Form gleiten.

Das Feststoffgemisch wird danach gleichmäßig in die Form gestreut. Die Form kann beliebig komplex sein, wobei zu beachten ist, dass Dicken unter ca. 3 mm nicht mehr gut schäumbar sind.

Danach wird die Form geschlossen und in einem Ofen, beheizbare Presse, oder anderweitig erwärmt. Dabei schäumt das benetzte Polymer auf und der Haftvermittler schmilzt. Um das aufschäumende Polymer bildet sich eine Schicht aus Haftvermittler, dadurch wachsen die Korngrenzen beim Aufschäumen zusammen.

### Das Polymer

Die Formulierung (Meth)acrylsäure steht für Methacrylsäure, Acrylsäure oder Mischungen aus beiden. Die Formulierung (Meth)acrylnitril steht für Methacrylnitril, Acrylnitril oder Mischungen aus beiden. Entsprechendes gilt für eine Formulierung wie Alkyl(meth)acrylat. Diese steht für die Alkylester der Methacrylsäure, der Acrylsäure oder von Mischungen aus beiden.

Zur Herstellung des Gusspolymerisats werden zunächst Monomergemische, welche (Meth)acrylsäure und (Meth)acrylnitril, vorzugsweise in einem Molverhältnis zwischen 2:3 und 3:2 als Hauptbestandteile enthalten, hergestellt. Zusätzlich können weitere Comonomeren verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren nicht mehr als 30 Gew.-%, vorzugsweise nicht mehr als 10 Gew.-% der beiden Hauptbestandteile betragen. Geringe Mengen von vernetzenden Monomeren, wie z.B. Allylacrylat, können mitverwendet werden. Die Mengen sollten jedoch vorzugsweise höchstens 0,05 Gew.-% bis 2,0 Gew.-% betragen.

Das Gemisch für die Copolymerisation enthält ferner Treibmittel, die sich bei Temperaturen von etwa 150 bis 250 °C entweder zersetzen oder verdampfen und dabei eine Gasphase bilden.

Die Polymerisation findet zweckmäßig in Blockform statt. Bei der Herstellung von flachen Blöcken, z.B. in Schichten mit Dicken bis zu 80 mm, befindet sich das Monomerengemisch zwischen zwei Glasplatten, die am Rand jeweils abgedichtet sind und eine Art Flachkammer bilden. Diese Flachkammer ist von einem Wasserbad umgeben, das auf die gewünschte Polymerisationstemperatur eingestellt wird.

Die Polymerisation kann weitgehend oder über weite Bereiche unter isothermen Bedingungen durchgeführt werden, d.h. bei konstanter Wasserbadtemperatur. In vielen Fällen ist es möglich, von Anfang bis zum Ende der Polymerisation die Wasserbadtemperatur konstant zu halten. Gegebenenfalls kann die Wasserbadtemperatur aber auch zunächst über lange Zeit konstant gehalten werden und nach einer bestimmten Zeit erhöht werden, um einen Teil der Polymerisation bei einer höheren Temperatur durchzuführen.

Auch in dieser nächsten, bei einer höheren Temperatur durchgeführten Polymerisationsphase kann die Wasserbadtemperatur konstant gehalten werden.

Die gewählte Wasserbadtemperatur hängt ab von der Dicke der Polymerisationskammer und der bei der Polymerisation verwendeten Rezeptur. Dabei ist es im Allgemeinen vorteilhaft, mit steigender Dicke der herzustellenden Platte die Polymerisationstemperatur und damit auch die Temperatur des Wasserbads zu niedrigeren Werten zu verschieben.

Die geeignete Temperatur für Rezeptur und Dicke kann jeweils durch einfache Vorversuche optimiert werden.

Es versteht sich von selbst, dass die Temperatur auf die Dicke der Kammer und der Rezeptur im Rahmen der oben aufgeführten Grenzen so eingestellt wird, dass die bei der Polymerisation frei werdende Wärme in ausreichendem Maße abgeführt werden kann, ohne dass es während der Polymerisation zu unerwünschten Temperaturen im Polymerisationsgemisch kommt. Nach Abschluss des Polymerisationsvorgangs, der vom umgebenden Wasserbad gesteuert wird, wird das Tempern in einem Wärmeschrank durchgeführt. Das Tempern findet im Allgemeinen bei Temperaturen von 80 bis 130 °C statt, wobei, wie bereits ausgeführt, eine gleichmäßig oder in Stufen steigende Temperaturführung, beginnend bei 38 °C, bevorzugt beginnend bei der Polymerisationstemperatur, eingestellt werden kann. Für diese Endpolymerisation im Temperschrank reichen im Allgemeinen 10 bis 1.000 Stunden aus.

### Die Treibmittel

Als Treibmittel (C) können folgende Verbindungen oder Gemische daraus verwendet werden: Formamid, Ameisensäure, Harnstoff, Itakonsäure, Zitronensäure, Dicyandiamid, Wasser, Monoalkylharnstoffe, Dimethylharnstoff, 5,5'-Azo-bis-5-äthyl-1,3-dioxan, 2,2'-Azo-bis-isobuttersäurebutylamid, 2,2'-Azo-bis-isobuttersäure-N-diethylamid, 2,2',4,4,4',4'-Hexamethyl-2,2'-azopentan, 2,2'-Azo-bis-2-methyl-propan, Dimethylcarbonat, Di-tert-butycarbonat, Acetoncyanhydrincarbonat, Oxi-isobuttersäuremethylester-carbonat, N-Methylurethan, N-Ethylurethan, N-tert-butylurethan, Urethan, Oxalsäure, Maleinsäure, Oxi-isobuttersäure, Malonsäure, Cyanformamid, Dimethylmaleinsäure, Methantetracarbonsäuretetraäthylester, Oxamidsäure-n-butylester, Methantricarbonsäuretrimethylester, Methantricarbonsäuretriäthylester, sowie einwertige Alkohole aus 3 bis 8 Kohlenstoffatomen wie z.B. Propanol-1, Propanol-2, Butanol-1, Butanol-2, tert-Butanol und iso-Butanol.

### Die Initiatoren

Als Initiatoren werden Verbindungen und Initiatorsysteme verwendet, die radikalische Polymerisationen in Gang setzen können. Bekannte Verbindungsklassen sind Peroxide, Hydroperoxide, Peroxodisulfate, Percarbonate, Perketale, Peroxiester, Wasserstoffperoxid und Azoverbindungen. Beispiele für Initiatoren sind Wasserstoffperoxid, Dibenzoylperoxid, Dicyclohexylperoxodicarbonat, Dilaurylperoxid, Methylethylketonperoxid, Acetylacetonperoxid, Di-tert.-butylperoxid, tert.-Butylhydroperoxid, Cumolhydroperoxid, tert.-Butylperoctanoat, tert.-Butylper-2-ethylhexanoat, tert.-Butylperneodecanoat, tert.-Amylperpivalat, tert.-Butylperpivalat, tert.-Butylperbenzoat, Lithium-, Natrium-, Kalium- und Ammoniumperoxodisulfat, Azoisobutyronitril, 2,2-Azobisiso-2,4-dimethylvaleronitril, 2,2-Azobisisobutyro-nitril, 2,2'-Azo-bis(2-amidinopropan)dihydrochlorid, 2-(Carbamoylazo)isobutyronitril und 4,4'-Azobis(cyanovaleriansäure).

Gleichfalls geeignet sind Redoxinitiatoren (H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Es kann günstig sein, Initiatoren und Initiatorsysteme mit unterschiedlichen Zerfallseigenschaften bezüglich Zeit und Temperatur zu kombinieren. Bevorzugt werden die Initiatoren in Mengen von 0,01 Gew.-% bis 2 Gew.-%, besonders bevorzugt von 0,15 Gew.-% bis 1,5 Gew.-% bezogen auf das Gesamtgewicht der Monomere eingesetzt.

Die Polymerisation erfolgt vorzugsweise über Varianten der Substanzpolymerisation, wie beispielsweise das so genannte Kammerverfahren, ohne hierauf beschränkt zu sein.

Das Gewichtsmittel des Molekulargewichts *M̅_{w}* der Polymere ist vorzugsweise größer als 10⁶ g/mol, insbesondere größer als 3×10⁶ g/mol, ohne dass hierdurch eine Einschränkung erfolgen soll.

Des Weiteren können die Vorprodukte übliche Zusatzstoffe enthalten. Hierzu gehören unter anderem Antistatika, Antioxidantien, Entformungsmittel, Schmiermittel, Farbstoffe, Flammschutzmittel, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Leitfähige Partikel, die eine elektrostatische Aufladung der Schaumstoffe verhindern, sind eine weitere Klasse von bevorzugten Zusatzstoffen. Hierzu gehören unter anderem Metall- und Rußpartikel, die auch als Fasern vorliegen können, mit einer Größe im Bereich von 10 nm bis 10 mm, wie dies in EP 0 356 714 A1 beschrieben ist.

Ein ganz besonders bevorzugter einsetzbarer Poly(meth)acrylimid-Schaumstoff kann beispielsweise durch folgende Schritte erhalten werden:
1. Herstellen einer Polymerisatplatte durch radikalische Polymerisation einer Zusammensetzung bestehend aus
   (a) einer Monomermischung aus 20 Gew.-% bis 60 Gew.-% Methacrylnitril, 80 Gew.-% bis 40 Gew.-% Methacrylsäure und gegebenenfalls bis 20 Gew.-%, bezogen auf die Summe von Methacrylsäure und Methacrylnitril, weiteren monofunktionellen, vinylisch ungesättigten Monomeren
   (b) 0 Gew.-% bis 15 Gew.-% eines Treibmittelgemisches aus Formamid oder Monomethylformamid und einem einwertigen aliphatischen Alkohol mit 3 - 8 Kohlenstoffatomen im Molekül, wie beispielsweise Isopropanol,
   (c) einem Vernetzersystem, welches besteht aus
      (c.1) 0,005 Gew.-% bis 5 Gew.-% einer radikalisch polymerisierbaren vinylisch ungesättigten Verbindung mit mindestens 2 Doppelbindungen im Molekül und
      (c.2) 0,1 Gew.-% bis 5 Gew.-% Magnesiumoxid gelöst in der Monomermischung
   (d) einem Initiatorsystem
   (e) üblichen Zusatzstoffen
2. Diese Mischung wird mehrere Tage bei 30 °C bis 45°C in einer aus zwei Glasplatten der Größe 50 cm * 50 cm und einer 2,2 cm dicken Randabdichtung gebildeten Kammer polymerisiert. Anschließend wird das Polymerisat zur Poly(meth)acrylimid Endpolymerisation etwa 20 h einem von 40°C bis 130°C reichenden Temperprogramm unterworfen. Die folgende Schäumung erfolgt während einiger Stunden bei 200 °C bis 250°C.

### Optionale Zusatzstoffe für Poly(meth)acrylimide

Des Weiteren können den Gemischen übliche Zusatzstoffe zugesetzt werden. Geeignete Mengen sind z. B. 0 Gew.-% bis 20 Gew.-%, 0 Gew.-% bis 10 Gew.-% oder 0 Gew.-% bis 5 Gew.-%, bezogen auf die Monomermischung.
Die üblichen Zusatzstoffe sind verschieden von den genannten Monomeren, Vernetzer, Treibmittelmitteln oder Initiatoren.
Hierzu gehören unter anderem Antistatika, Antioxidantien, Entformungsmittel, Schmiermittel, Farbstoffe, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und Weichmacher. Weitere mögliche Zusätze sind Flammschutzmittel. Neben halogenhaltigen Flammschutzmitteln, die teilweise Antimonoxide enthalten, können auch phosphorhaltige Verbindungen eingesetzt werden. Phosphorhaltige Verbindungen sind wegen der geringeren Rauchgastoxizität im Brandfall bevorzugt. Zu den Phosphorverbindungen gehören unter anderem Phosphane, Phosphanoxide, Phosphoniumverbindungen, Phosphonate, Phosphite und/oder Phosphate. Diese Verbindungen können organischer und/oder anorganischer Natur sein, wie beispielsweise Phosphorsäuremonoester, Phosphonsäuremonoester, Phosphorsäurediester, Phosphonsäurediester und Phosphorsäuretriester sowie Polyphosphate.

### Der Haftvermittler

Prinzipiell können die Haftvermittler flüssig oder fest sein, es können auch Gemische von festen Haftvermittlern untereinander, von festen und flüssigen Haftvermittlern miteinander und von flüssigen Haftvermittlern untereinander eingesetzt werden.

Es können beispielsweise Schmelzklebestoffe oder Reaktionsklebestoffe eingesetzt werden, die Haftvermittler können dabei auf Basis von verschiedenen Polyamid(PA)-Typen (z.B. PA 6 (Vestamelt®-Typen, vertrieben von der Evonik Degussa GmbH), PMMA (z.B. Degalan® BM310, vertrieben von der Evonik Röhm GmbH), PMMI (Acrymid® TT50, vertrieben von der Evonik Röhm GmbH (Acrymid® TT50 ist ein hochwärmeformbeständiges Poly(n-methyl methacrylimid)) oder Härter (Vestamin®, vertrieben von der Evonik Degussa GmbH (Vestamin® ist ein Vernetzer auf Basis von aliphatischen und cycloaliphatischen Aminen.)) sein. Gegebenenfalls kann der Haftvermittler aus einer Mischung der vorgenannten Bestandteile bestehen.

Die Schmelztemperatur der Haftvermittler liegt zwischen 120 Grad Celsius und 255 Grad Celsius, bevorzugt zwischen 120 Grad Celsius und 250 Grad Celsius und ganz besonders bevorzugt zwischen 120 Grad Celsius und 245 Grad Celsius.

Die Menge an Haftvermittler oder Haftvermittlergemisch liegt, bezogen auf das Poly(meth)acrylimid-Polymer, zwischen 1 Gew.-% und 20 Gew.-%, bevorzugt zwischen 1 Gew.-% und 15 Gew.-% und ganz besonders bevorzugt zwischen 1 Gew.-% und 10 Gew.-%.

Gegebenenfalls können noch die üblichen Entformungshilfsmittel und/oder Trennmittel eingesetzt werden, auch kann die Form mit Antihaftbeschichtungen versehen sein.

### Durchführung

### Herstellung von formgeschäumten Materialien

Folgende Parameter wurden bei allen Schäumvorgängen verwendet:
- Der Druck p betrug ca. 3 bis 4 MPa und dient zur Fixierung und Schließen der Form
- Die Temperatur T betrug ca. 240 Grad Celsius bis 250 Grad Celsius.
- Die Schäumzeit betrug ca. 1½ Stunden, bei vorgeschäumtem Material ca. 30 min.

### Druckversuch

Der Druckversuch erfolgte nach DIN EN ISO 844.

Die Probekörper werden formgeschäumt und anschließend auf das erforderliche Prüfmaß von 50 mm x 50 mm x 50 mm zugesägt. Die Konditionierung der Probekörper erfolgt bei 125 Grad Celsius für 2 Stunden. Für die Prüfung der Druckfestigkeit wird eine Prüfmaschine der Firma Zwick/Roell, Modell Z 030, verwendet.
Auf Grund des Materialverhaltens wird bei formgeschäumtem Material die Druckspannung bei 10 % Stauchung ermittelt, für ROHACELL® wird die Druckfestigkeit ermittelt, da es hier zu einem eindeutigen Bruch in eines Zellebene kommt.

### Zugversuch

Der Zugversuch erfolgte in Anlehnung an die DIN EN ISO 527-2.

Abweichend von dieser Norm erfolgte die Herstellung der Probekörper durch mechanische Bearbeitung formgeschäumter Platten. Die Probekörper (Typ 1B) werden aus ROHACELL® - Plattenzuschnitten und formgeschäumten Platten gefräst und haben eine Dicke von 10 mm. Die Konditionierung der Probekörper erfolgt bei 125 Grad Celsius für 2 Stunden. Für die Prüfung der Zugfestigkeit wird eine Prüfmaschine der Firma Zwick/Roell, Modell Z 030, verwendet.

### Ergebnisse

Das erfindungsgemäße Material erreicht ca. 50 % der Druckfestigkeit von ROHACELL® RIMA bei gleichen Dichten.

Der Haftvermittler VESTAMELT® (5 Gew.-%, bezogen auf das eingesetzte Mahlgut) verbessert die Druckfestigkeit um 15 %, der Haftvermittler DEGALAN® BM310 (5 Gew.-%, bezogen auf das eingesetzte Mahlgut) verbessert die Druckfestigkeit um 8 %.

Das erfindungsgemäße Material erreicht etwa 30 % der Zugfestigkeit von ROHACELL® RIMA und 15 % der Bruchdehnung. Der E-Modul liegt bei etwa 85 % des Wertes von ROHACELL® RIMA 110.

Der Haftvermittler VESTAMELT® (5 Gew.-%, bezogen auf das eingesetzte Mahlgut) erhöht die Zugfestigkeit und die Bruchdehnung um ca. 35%, den E-Modul um etwa 5%, der Haftvermittler DEGALAN® BM310 (5 Gew.-%, bezogen auf das eingesetzte Mahlgut) verbessert die Zugfestigkeit, den E-Modul und die Bruchdehnung um weniger als 5 %.

### Zweistufiges Schäumen

Um die Prozesszeiten zu minimieren, wurde die Möglichkeit geprüft mit Mahlgut, das bereits vorgeschäumt wurde, eine Form vollständig auszuschäumen. Es waren daher verschiedene Vorschäumtemperaturen wie beispielsweise zwischen 170°C und 190°C und Vorschäumzeiten wie beispielsweise zwischen 60 min und 90 min sowie verschiedene Temperaturen wie beispielsweise zwischen 230°C und 250 °C und Zeiten wie beispielsweise zwischen 10 und 40 min für das Fertigschäumen in der Form zu testen.

Der Unterschied zum einstufigen Schäumen besteht im Wesentlichen darin, dass das Mahlgut vor dem IMF-Prozess bereits vorgeschäumt wird. Dazu wird die berechnete Menge Mahlgut, die für die Kavität benötigt wird, bei einer Temperatur zwischen 175°C und 185°C für ca. 1 Std. im vorgeheizten Umluftofen gelagert. Durch den einsetzenden Schäumprozess vergrößert sich das Mahlgut um das Zwei- bis Dreifache in seinem Volumen. Dabei tritt eine weiss- bis gelbliche Färbung ein. Das vorgeschäumte Material wird in der Kavität verteilt, wie es auch beim Mahlgut erfolgt. Es wird bei den gleichen Bedingungen wie beim einstufigen Schäumen, abgesehen von der Prozesszeit, ein Schaumkörper hergestellt. Durch das Vorschäumen verkürzt sich die Prozesszeit. Zum Fertigschäumen wird eine Schäumzeit von t = 20-30 min angesetzt. Die Kühlung erfolgt gleichermaßen wie beim einstufigen Prozess.

Das zweistufige Schäumen soll vor allem die Reduzierung der Zykluszeit ermöglichen, um Material für längere Zeit zwischenlagern zu können und kürzere Taktzeiten für die Produktion von Schaumkernen zu gewährleisten.

Der erfindungsgemäß erhältliche Schaumstoffformkörper eigner sich als Werkstoffkomponente zur Herstellung von Raum- , Luft- , Wasser- und Landfahrzeugen.

## Patentansprüche

1. Einstufiges Verfahren zur Herstellung eines Schaumstoffformkörpers aus Poly(meth)acrylimid, einem Haftvermittler oder einen Haftvermittlergemisch und optionalen Hilfsstoffen, umfassend folgende Schritte:
- Mahlen eines Kunststoffformkörpers aus Poly(meth)acrylimid, enthaltend Treibmittel, die bei einer Temperatur zwischen 150 und 250°C sich zersetzen oder verdampfen,
- Beschichten des im vorherigen Schritts erhaltenen Mahlguts mit eine Haftvermittler,
- Einfüllen des beschichteten Mahlguts in eine Form,
- optionales Hinzufügen der Hilfsstoffe,
- Erhitzen der Form,
- Abkühlen der Form unter die Schäumtemperatur
- Entformen des Schaumstoffformkörpers.

2. Zweistufiges Verfahren zur Herstellung eines Schaumstoffformkörpers aus Poly(meth)acrylimid, einem Haftvermittler oder einen Haftvermittlergemisch und optionalen Hilfsstoffen, umfassend folgende Schritte:
- Mahlen eines Kunststoffformkörpers aus Poly(meth)acrylimid, enthaltend Treibmittel, die bei einer Temperatur zwischen 150 und 250°C sich zersetzen oder verdampfen,
- Vorschäumen des Mahlguts
- Beschichten des im vorherigen Schritts erhaltenen Mahlguts mit einem Haftvermittler,
- Einfüllen des beschichteten Mahlguts in eine Form,
- optionales Hinzufügen der Hilfsstoffe,
- Erhitzen der Form,
- Abkühlen der Form unter die Schäumtemperatur
- Entformen des Schaumstoffformkörpers.

3. Verfahren nach Anspruch 1 oder Anspruch 2,
**dadurch gekennzeichnet,**
**dass** man als Haftvermittler Polyamide verwendet.

4. Verfahren nach Anspruch 1 oder Anspruch 2,
**dadurch gekennzeichnet,**
**dass** man als Haftvermittler Poly(meth)acrylate verwendet.

5. Verfahren nach Anspruch 1 oder Anspruch 2,
**dadurch gekennzeichnet,**
**dass** man als Haftvermittler Polyamide in Mengen von 1 Gew.-% bis 20 Gew.-%, bezogen auf das Mahlgut, verwendet.

6. Verfahren nach Anspruch 1 oder Anspruch 2,
**dadurch gekennzeichnet,**
**dass** man als Haftvermittler Polyamide in Mengen von 1 Gew.-% bis 15 Gew.-%, bezogen auf das Mahlgut, verwendet

7. Verfahren nach Anspruch 1 oder Anspruch 2,
**dadurch gekennzeichnet,**
**dass** man als Haftvermittler Polyamide in Mengen von 1 Gew.-% bis 10 Gew.-%, bezogen auf das Mahlgut, verwendet.

8. Verfahren nach Anspruch 1 oder Anspruch 2,
**dadurch gekennzeichnet,**
**dass** man als Haftvermittler Poly(meth)acrylate in Mengen von 1 Gew.-% bis 20 Gew.-%, bezogen auf das Mahlgut, verwendet

9. Verfahren nach Anspruch 1 oder Anspruch 2,
**dadurch gekennzeichnet,**
**dass** man als Haftvermittler Poly(meth)acrylate in Mengen von 1 Gew.-% bis 15 Gew.-%, bezogen auf das Mahlgut, verwendet

10. Verfahren nach Anspruch 1 oder Anspruch 2,
**dadurch gekennzeichnet,**
**dass** man als Haftvermittler Poly(meth)acrylate in Mengen von 1 Gew.-% bis 10 Gew.-%, bezogen auf das Mahlgut, verwendet

11. Schaumstoffformkörper, erhältlich nach einem Verfahren der Patentansprüche 1 bis 10.

12. Verwendung des Schaumstoffformkörpers gemäß Patentanspruch 11 zur Herstellung von Raum- , Luft- , Wasser- und Landfahrzeugen.

## Claims

1. One-stage method for producing a foam moulding from poly(meth)acrylimide, an adhesion promoter or an adhesion promoter mixture and optional auxiliaries, comprising the following steps:
- grinding a polymeric moulding made of poly(meth)acrylimide, comprising blowing agents which decompose or evaporate at a temperature between 150 and 250°C,
- coating the grindings obtained in the preceding step with an adhesion promoter,
- introducing the coated grindings into a mould,
- optionally adding the auxiliaries,
- heating the mould,
- cooling the mould below the foaming temperature, and
- demoulding the foam moulding.

2. Two-stage method for producing a foam moulding from poly(meth)acrylimide, an adhesion promoter or an adhesion promoter mixture and optional auxiliaries, comprising the following steps:
- grinding a polymeric moulding made of poly(meth)acrylimide, comprising blowing agents which decompose or evaporate at a temperature between 150 and 250°C,
- pre-foaming the grindings,
- coating the grindings obtained in the preceding step with an adhesion promoter,
- introducing the coated grindings into a mould,
- optionally adding the auxiliaries,
- heating the mould,
- cooling the mould below the foaming temperature, and
- demoulding the foam moulding.

3. Method according to Claim 1 or Claim 2, **characterized in that** polyamides are used as adhesion promoters.

4. Method according to Claim 1 or Claim 2, **characterized in that** poly(meth)acrylates are used as adhesion promoters.

5. Method according to Claim 1 or Claim 2, **characterized in that** polyamides are used as adhesion promoters in amounts of 1% to 20% by weight, based on the grindings.

6. Method according to Claim 1 or Claim 2, **characterized in that** polyamides are used as adhesion promoters in amounts of 1% to 15% by weight, based on the grindings.

7. Method according to Claim 1 or Claim 2, **characterized in that** polyamides are used as adhesion promoters in amounts of 1% to 10% by weight, based on the grindings.

8. Method according to Claim 1 or Claim 2, **characterized in that** poly(meth)acrylates are used as adhesion promoters in amounts of 1% to 20% by weight, based on the grindings.

9. Method according to Claim 1 or Claim 2, **characterized in that** poly(meth)acrylates are used as adhesion promoters in amounts of 1% to 15% by weight, based on the grindings.

10. Method according to Claim 1 or Claim 2, **characterized in that** poly(meth)acrylates are used as adhesion promoters in amounts of 1% to 10% by weight, based on the grindings.

11. Foam moulding obtainable by a method of Claims 1 to 10.

12. Use of the foam moulding according to Claim 11 for producing space, air, water and land vehicles.

## Revendications

1. Procédé à une étape pour la fabrication d'un corps moulé en mousse constitué par du poly(méth)acrylimide, un promoteur d'adhésion ou un mélange de promoteurs d'adhésion et éventuellement des adjuvants, comprenant les étapes suivantes :
- le broyage d'un corps moulé en plastique constitué par du poly(méth)acrylimide, contenant des agents gonflants qui se décomposent ou s'évaporent à une température comprise entre 150 et 250 °C,
- le revêtement du produit broyé obtenu à l'étape précédente avec un promoteur d'adhésion,
- le remplissage du produit broyé revêtu dans un moule,
- éventuellement l'ajout des adjuvants,
- le chauffage du moule,
- le refroidissement du moule en dessous de la température de moussage,
- le démoulage du corps moulé en mousse.

2. Procédé à deux étapes pour la fabrication d'un corps moulé en mousse constitué par du poly(méth)acrylimide, un promoteur d'adhésion ou un mélange de promoteurs d'adhésion et éventuellement des adjuvants, comprenant les étapes suivantes :
- le broyage d'un corps moulé en plastique constitué par un poly(méth)acrylimide, contenant des agents gonflants qui se décomposent ou s'évaporent à une température comprise entre 150 et 250 °C,
- le pré-moussage du produit broyé,
- le revêtement du produit broyé obtenu à l'étape précédente avec un promoteur d'adhésion,
- le remplissage du produit broyé revêtu dans un moule,
- éventuellement l'ajout des adjuvants,
- le chauffage du moule,
- le refroidissement du moule en dessous de la température de moussage,
- le démoulage du corps moulé en mousse.

3. Procédé selon la revendication 1 ou la revendication 2, **caractérisé en ce que** des polyamides sont utilisés en tant que promoteur d'adhésion.

4. Procédé selon la revendication 1 ou la revendication 2, **caractérisé en ce que** des poly(méth)acrylates sont utilisés en tant que promoteur d'adhésion.

5. Procédé selon la revendication 1 ou la revendication 2, **caractérisé en ce que** des polyamides sont utilisés en tant que promoteur d'adhésion en quantités de 1 % en poids à 20 % en poids, par rapport au produit broyé.

6. Procédé selon la revendication 1 ou la revendication 2, **caractérisé en ce que** des polyamides sont utilisés en tant que promoteur d'adhésion en quantités de 1 % en poids à 15 % en poids, par rapport au produit broyé.

7. Procédé selon la revendication 1 ou la revendication 2, **caractérisé en ce que** des polyamides sont utilisés en tant que promoteur d'adhésion en quantités de 1 % en poids à 10 % en poids, par rapport au produit broyé.

8. Procédé selon la revendication 1 ou la revendication 2, **caractérisé en ce que** des poly(méth)acrylates sont utilisés en tant que promoteur d'adhésion en quantités de 1 % en poids à 20 % en poids, par rapport au produit broyé.

9. Procédé selon la revendication 1 ou la revendication 2, **caractérisé en ce que** des poly(méth)acrylates sont utilisés en tant que promoteur d'adhésion en quantités de 1 % en poids à 15 % en poids, par rapport au produit broyé.

10. Procédé selon la revendication 1 ou la revendication 2, **caractérisé en ce que** des poly(méth)acrylates sont utilisés en tant que promoteur d'adhésion en quantités de 1 % en poids à 10 % en poids, par rapport au produit broyé.

11. Corps moulé en mousse, pouvant être obtenu par un procédé selon les revendications 1 à 10.

12. Utilisation du corps moulé en mousse selon la revendication 11 pour la fabrication de véhicules spatiaux, aériens, marins et terrestres.
